# EUROPÄISCHE PATENTSCHRIFT

(11) **EP 3 285 970 B1**
(45) Veröffentlichungstag und Bekanntmachung des Hinweises auf die Patenterteilung: **20.03.2019**
(21) Anmeldenummer: 16718338.3
(22) Anmeldetag: 22.04.2016
(51) Int. Cl.: B25F 5/00, B25F 5/02

(54) **WERKZEUGAKKU-SCHUTZSCHALE**
TOOL BATTERY PROTECTION SHELL
COQUE DE PROTECTION DE BATTERIE D'OUTIL

(30) Priorität: 24.04.2015 EP 15165019
(43) Veröffentlichungstag der Anmeldung: 28.02.2018
(73) Patentinhaber: Hilti Aktiengesellschaft, 9494 Schaan (LI)
(72) Erfinder: RUNAU, Benjamin, 76137 Karlsruhe (DE)
(74) Vertreter: Hilti Aktiengesellschaft Corporate Intellectual Property
(86) Internationale Anmeldenummer: PCT/EP2016/059019
(87) Internationale Veröffentlichungsnummer: WO 2016/170120

(56) Entgegenhaltungen:
- EP-A1- 1 312 448
- EP-A2- 1 516 702
- DE-U1- 20 117 889
- GB-A- 2 432 036
- US-A- 5 347 684
- US-A1- 2012 061 117

## Beschreibung

Eine gemäß dem Stand der Technik bekannte Werkzeugakku-Schutzschale für einen Handwerkzeugakku wird in der EP1516702A2 offenbart. Die vorliegende Erfindung betrifft eine Werkzeugakku-Schutzschale für ein Handwerkzeugakku mit einem Werkzeugakkugehäuse. Die vorliegende Erfindung betrifft ebenfalls einen Handwerkzeugakku.

Handwerkzeugakkus dienen der Versorgung einer Handwerkzeugmaschine, insbesondere eines Bohrhammers oder Kombihammers, mit einem elektrischen Versorgungsstrom. Werkzeugakku-Schutzschalen, die grundsätzlich aus dem Stand der Technik bekannt sind, dienen dem Schutz von Handwerkzeugakkus gegen äußere Umwelteinflüsse wie beispielsweise Staub, Feuchtigkeit sowie Stößen.

Es ist Aufgabe der vorliegenden Erfindung, eine Werkzeugakku-Schutzschale sowie einen Handwerkzeugakku anzugeben, die einen verbesserten Schutz gegen Einflüsse bieten beziehungsweise besser gegen solche geschützt werden.

Bezüglich der Werkzeugakku-Schutzschale wird die Aufgabe dadurch gelöst, dass die Werkzeugakku-Schutzschale als Sandwichaufbau mit einer Außenschale und einer als Dämpfungsschicht wirkenden Zwischenschicht, die weicher und/oder elastischer als die Außenschale ist, ausgebildet ist, wobei die Zwischenschicht derart an der Außenschale angeordnet ist, dass sie zwischen der Außenschale und einer Oberfläche des Werkzeugakkugehäuses befindlich ist, wenn die Werkzeugakku-Schutzschale am Werkzeugakkugehäuse angeordnet ist.

Die Erfindung schließt die Erkenntnis ein, dass, wenn ein in einer Handwerkzeugmaschine aufgenommener Handwerkzeugakku ungeschützt auf den Boden fällt, es zum Bruch des Werkzeugakkugehäuses kommen kann. Dies gilt umso mehr bei großen und schweren Akkus, d.h. insbesondere für Handwerkzeugakkus mit 22 Volt oder 36 Volt Versorgungsspannung. Werkzeugakku-Schutzschalen des Standes der Technik sind typischerweise sehr sperrig und schwer und lösen das Problem des Bruchschutzes demnach sehr benutzerunfreundlich.

Dadurch, dass die Werkzeugakku-Schutzschale erfindungsgemäß als Sandwichaufbau mit einer Außenschale und einer als Dämpfungsschicht wirkenden Zwischenschicht ausgebildet ist, wobei die Zwischenschicht weicher und/oder elastischer als die Außenschale ist, werden lokale Spannungskonzentrationen beziehungsweise Spannungsspitzen, die beim Aufprall des Handwerkzeugakkus auf eine harte Oberfläche typischerweise auftreten, über eine größere Fläche verteilt und somit die Wahrscheinlichkeit des Bruches des Werkzeugakkugehäuses minimiert. Vorteilhafterweise kann die erfindungsgemäße Werkzeugakku-Schutzschale vergleichsweise dünn und gewichtsarm realisiert werden, was besonders benutzerfreundlich ist. Des Weiteren wurde erkannt, dass eine sturzbedingte Verformung des Werkzeugakkugehäuses besonders wirksam vermieden wird und somit ein Eintrag von Stoßenergie in Akku-Zellen, die im Werkzeugakkugehäuse aufgenommen sind, reduziert werden kann. Des Weiteren bietet die Außenschale der Werkzeugakku-Schutzschale eine erhöhte Abriebfestigkeit im Vergleich zu Werkzeugakku-Schutzschalen des Standes der Technik, da die Außenschale vergleichsweise hart ausgeführt werden kann.

In einer besonders bevorzugten Ausgestaltung weist die Außenschale ein Außenschalen-Elastizitätsmodul und die Zwischenschicht ein Zwischenschicht-Elastizitätsmodul auf, wobei der Außenschalen-Elastizitätsmodul größer als der Zwischenschicht-Elastizitätsmodul ist. Die Messung eines Elastizitätsmoduls kann in Anlehnung an EN ISO 527-1 (europäische Norm für Kunststoffe zur Bestimmung der Zugeigenschaften) ermittelt werden. Die Außenschale der Werkzeugakku-Schutzschale kann beispielsweise ein Elastizitätsmodul von größer als 1500 MPa (Mega-Pascal), bevorzugt größer als 2000 MPa aufweisen. Die Außenschale der Werkzeugakku-Schutzschale besteht bevorzugt aus Kunststoff. Sie kann beispielsweise aus einem schlagzähen Polystyrol mit einem Elastizitätsmodul größer als 1500 MPa, bevorzugt größer als 2000 MPa bestehen.

Die als Dämpfungsschicht wirkende Zwischenschicht besteht vorzugsweise aus Kunststoff. Die als Dämpfungsschicht wirkende Zwischenschicht weist vorzugsweise ein Elastizitätsmodul von kleiner als 2000 MPa auf, bevorzugt kleiner als 1500 MPa, weiter bevorzugt kleiner als 1000 MPa oder 500 MPa. Es hat sich als vorteilhaft herausgestellt, wenn die Zwischenschicht aus einem Elastomer, insbesondere einem thermoplastischen Elastomer besteht.

Die Außenschale und die Zwischenschicht können aus dem gleichen Stoff bestehen und voneinander verschiedene Dichten aufweisen. Dies hat den Vorteil, dass nur eine Stoffgruppe bereitgestellt werden muss, was eine günstige Fertigung der Werkzeugakku-Schutzschale begünstigt. Die Zwischenschicht besteht bevorzugt aus einem aufgeschäumten Kunststoff. Die Zwischenschicht kann aus einen thermoplastischen Elastomer, das kompakt oder geschäumt ist, bestehen. Die Zwischenschicht kann aus kompaktem oder geschäumtem Nitrilkautschuk oder Synthesekautschuk bestehen. Es hat sich als vorteilhaft herausgestellt, wenn die Zwischenschicht aus Polystyrol besteht.

Es hat sich ebenfalls als vorteilhaft herausgestellt, wenn die Außenschale eine höhere Shore-Härte als die Zwischenschicht aufweist. Shore-Härte wird gemäß DIN ISO 7619-1 bestimmt. So kann die Außenschale beispielsweise ein Härte größer 80 Shore A und die Zwischenschicht eine Härte kleiner 80 Shore A, bevorzugt kleiner 70 Shore A oder 60 Shore A aufweisen.

Um eine Minimierung von durch Stoß bewirkten Spannungsspitzen weiter zu minimieren, weist der Sandwichaufbau bevorzugt eine weitere Schale und eine weitere Zwischenschicht auf. Die weitere Schale und/oder die weitere Zwischenschicht können derart bezüglich der Außenschale angeordnet sein, dass sie zwischen der Außenschale und der Oberfläche des Werkzeugakkugehäuses befindlich sind, wenn die Werkzeugakku-Schutzschale am Werkzeugakkugehäuse angeordnet ist. Bevorzugt wechseln weitere Schalen und weitere Zwischenschichten einander ab. Besonders bevorzugt weist eine jeweilige weitere Zwischenschicht ein Zwischenschicht-Elastizitätsmodul und eine weitere Schale ein Außenschalen-Elastizitätsmodul auf, wobei der Zwischenschicht-Elastizitätsmodul kleiner als der Außenschalen-Elastizitätsmodul ist.

Es hat sich als vorteilhaft herausgestellt, wenn die Außenschale und die weitere Schale aus dem gleichen Stoff bestehen. Es hat sich als vorteilhaft herausgestellt, wenn die Zwischenschicht und die weitere Zwischenschicht aus dem gleichen Stoff bestehen.

Die Zwischenschicht kann eine Wandstärke zwischen 0,5 mm und 10 mm aufweisen, bevorzugt zwischen 2 mm und 2,5 mm. Die Außenschale weist bevorzugt eine Wandstärke zwischen 0,5 mm und 10 mm auf, bevorzugt zwischen 2 mm und 2,5 mm. Im Sinne einer einfachen Fertigbarkeit hat es sich als vorteilhaft herausgestellt, wenn die Zwischenschicht eine im Wesentlichen konstante Wandstärke aufweist. Alternativ kann die Wandstärke der Zwischenschicht variieren. Es hat sich als vorteilhaft herausgestellt, wenn die Wandstärke der Zwischenschicht mit Aufprallrichtung relativ zur Schwerpunktlage des Werkzeugakkus, an dem die Werkzeugakku-Schutzschale anzubringen ist, skaliert. Mit anderen Worten ist die Wandstärke der Zwischenschicht an der Stelle, an der das Werkzeugakkugehäuse typischerweise im Fall den Boden berührt, mit einer höheren Wandstärke ausgestattet als in übrigen Bereichen.

In einer besonders bevorzugten Ausgestaltung trägt eine Gesamtwandstärke der Werkzeugakku-Schutzschale weniger als 10 mm, bevorzugt unabhängig von der von ihr umfassten Anzahl von Zwischenschichten und/oder Schalen. Mit anderen Worten können beispielsweise eine Außenschale, eine erste Zwischenschicht, eine Zwischenschale und eine weitere Zwischenschicht vorgesehen sein, deren (summarische) Gesamtwandstärke weniger als 10 mm beträgt. Bevorzugt kann eine Gesamtwandstärke der Werkzeugakku-Schutzschale zwischen 4 und 5 mm betragen. Es hat sich herausgestellt, dass dies ein Optimum zwischen Materialeinsatz und Stoßfestigkeit in typischen Baustellensituationen darstellt.

Die Werkzeugakku-Schutzschale kann ausgebildet sein, dass sie mittels einer Klebeverbindung an dem Werkzeugakkugehäuse befestigbar ist. Alternativ oder zusätzlich kann die Werkzeugakku-Schutzschale mittels einer Rastverbindung an dem Werkzeugakkugehäuse befestigbar sein. Es hat sich als vorteilhaft herausgestellt, wenn die Werkzeugakku-Schutzschale mittels eines Filmscharniers, das bevorzugt mit der Rastverbindung kooperiert, an dem Werkzeugakkugehäuse befestigbar beziehungsweise befestigt ist.

Die Werkzeugakku-Schutzschale lässt sich besonders günstig fertigen, wenn die Außenschale und/oder die Zwischenschicht mittels Spritzgussverfahren, insbesondere mittels Koinjektion an das Werkzeugakkugehäuse angeformt sind.

Es hat sich als vorteilhaft herausgestellt, wenn die Werkzeugakku-Schutzschale als Eckenschutz und/oder Kantenschutz für einen Werkzeugakku ausgebildet ist. Bevorzugt ist die Werkzeugakku-Schutzschale ausgebildet, eine Ecke und/oder eine Kante des Werkzeugakkugehäuses passgenau aufzunehmen und einen überwiegenden Anteil der Oberfläche des Werkzeugakkugehäuses abdeckungsfrei zu belassen. Die Werkzeugakku-Schutzschale kann derart ausgebildet sein, dass sie genau zwei Ecken und die durch diese beiden Ecken abgegrenzte Kante vollständig umschließt.

Bezüglich des Handwerkzeugakkus wird die Aufgabe gelöst durch einen Handwerkzeugakku mit einer vorbeschriebenen Werkzeugakku-Schutzschale, die an dem Werkzeugakkugehäuse befestigt oder an diesem befestigbar ausgebildet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung eines ersten Ausführungsbeispiels einer erfindungsgemäßen Werkzeugakku-Schutzschale;
- Fig. 2: eine schematische Darstellung eines zweiten Ausführungsbeispiels einer erfindungsgemäßen Werkzeugakku-Schutzschale;
- Fig. 3: eine schematische Darstellung verschiedentlich hergestellter Werkzeugakku-Schutzschalen;
- Fig. 4: eine schematische Darstellung eines erfindungsgemäßen Handwerkzeugakkus mit einer daran befestigten Werkzeugakku-Schutzschale;
- Fig. 5: eine weitere schematische Darstellung des Handwerkzeugakkus aus Fig. 4;
- Fig. 6: eine schematische Darstellung einer als Eckenschutz/Kantenschutz ausgebildeten Werkzeugakku-Schutzschale;
- Fig. 7: mehrere perspektivische sowie eine Schnittdarstellung zur Verdeutlichung der Anordnung einer als Eck- und Kantenschutz ausgebildeter Werkzeugakku-Schutzschale an einem Handwerkzeugakku;
- Fig. 8: eine schematische Darstellung eines weiteren Ausführungsbeispiels einer Werkzeugakku-Schutzschale aufweisend eine Rastverbindung; und
- Fig. 9: eine schematische Darstellung eines Teils der Werkzeugakku-Schutzschale aus Fig. 8, befestigt an einem Handwerkzeugakku.

### Ausführungsbeispiele:

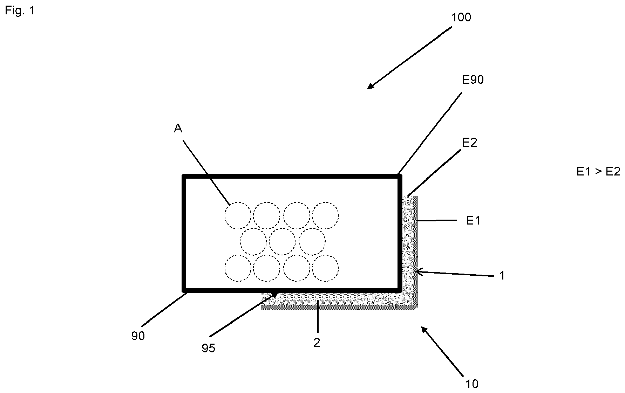

Eine erfindungsgemäße Werkzeugakku-Schutzschale 10 ist in Fig. 1 dargestellt. Diese weist eine Außenschale 1 und eine Zwischenschicht 2 auf, die als Sandwichaufbau bereitgestellt sind. Außenschale 1 und Zwischenschicht 2 können bei allen Ausführungsbeispielen im Wesentlichen deckungsgleich zueinander sein. Wie aus Fig. 1 ersichtlich, ist die Zwischenschicht 3 derart an der Außenschale 1 angeordnet, dass sie zwischen der Außenschale 1 und einer Oberfläche 95 des Werkzeugakkugehäuses 90 befindlich ist, wenn, wie gezeigt, die Werkzeugakku-Schutzschale 10 am Werkzeugakkugehäuse 90 angeordnet ist. Das Werkzeugakkugehäuse 90 ist einem Handwerkzeugakku 100 zugehörig, der zur Versorgung einer nicht gezeigten Handwerkzeugmaschine mit Akku-Zellen A ausgestattet ist.

Im vorliegenden Ausführungsbeispiel weist die Außenschale 1 ein Außenschalen-Elastizitätsmodul E1 in Höhe von 2500 MPa auf. Die Außenschale 1 besteht aus einem schlagzähen Polystyrol. Im vorliegenden Ausführungsbeispiel ist das Werkzeugakkugehäuse 90 ebenfalls aus einem schlagzähen Polystyrol bestehend. Der Elastizitätsmodul E90 des Werkzeugakkugehäuses 90 beträgt ebenfalls 2500 MPa. Die zwischen der Oberfläche 95 des Werkzeugakkugehäuses 90 und der Außenschale 1 befindliche Zwischenschicht 2, die als Dämpfungsschicht wirkt, ist vorliegend ein geschäumtes thermoplastisches Elastomer mit einem Zwischenschicht-Elastizitätsmodul E2 von 500 MPa. Demnach ist das Außenschalen-Elastizitätsmodul E1 größer als der Zwischenschicht-Elastizitätsmodul E2.

Beim Sturz des Handwerkzeugakkus 100 auf den Boden wird Stoßenergie zunächst in die Außenschale 1 der Werkzeugakku-Schutzschale 10 eingetragen und innerhalb der Außenschale 1 verteilt, im weiteren Verlauf auf die als Dämpfungsschicht wirkende Zwischenschicht 2 verteilt. Somit werden Spannungsspitzen von der eigentlichen Oberfläche 95 des Werkzeugakkugehäuses 90 ferngehalten, wodurch eine Aufnahme von Stoßenergie durch die Akku-Zellen A vermindert beziehungsweise weitestgehend verhindert wird.

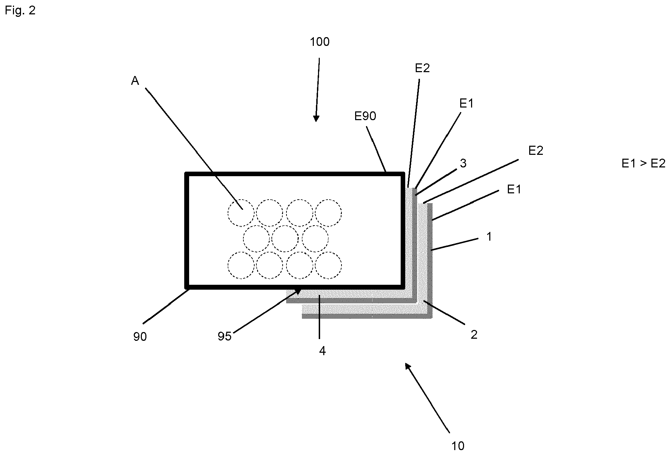

Eine Werkzeugakku-Schutzschale 10 in Fig. 2 weist als Sandwichaufbau eine Außenschale 1 und eine als Dämpfungsschicht wirkende Zwischenschicht 2 auf. Des Weiteren weist die Werkzeugakku-Schutzschale 10 eine weitere Schale 3, benachbart zur Zwischenschicht 2 und eine weitere Zwischenschicht 4, benachbart zur weiteren Schale 3 auf. Die Zwischenschichten 2, 4 sind bezüglich der Außenschale 1 derart angeordnet, dass sie zwischen der Außenschale 1 und der Oberfläche 95 des Werkzeugakkugehäuses 90 befindlich sind, wenn, wie gezeigt, die Werkzeugakku-Schutzschale 10 am Werkzeugakkugehäuse 90 angeordnet ist. Gleichermaßen ist die weitere Schale 3, die zwischen den beiden Zwischenschichten 2, 4 angeordnet ist, zwischen Außenschale 1 und der Oberfläche 95 des Werkzeugakkugehäuses 90 befindlich.

Im dargestellten Ausführungsbeispiel weisen die Außenschale 1 und die weitere Schale 3 den gleiche Außenschalen-Elastizitätsmodul E1 auf. Die beiden Zwischenschichten 2, 4 weisen jeweils ein Zwischenschicht-Elastizitätsmodul E2 auf, der kleiner als das Außenschalen-Elastizitätsmodul E1 ist. Durch den in Fig. 2 gezeigten Sandwichaufbau mit alternierenden Schalen 1, 3 und Zwischenschichten 2, 4 wird die Spannungsverteilung innerhalb der Werkzeugakku-Schutzschale 10 weiter verbessert. Dabei ist ersichtlich, dass die Zwischenschichten 2, 4 sowie die Außenschale 1 und die weitere Schale 3 eine im Wesentlichen konstante Wandstärke aufweisen.

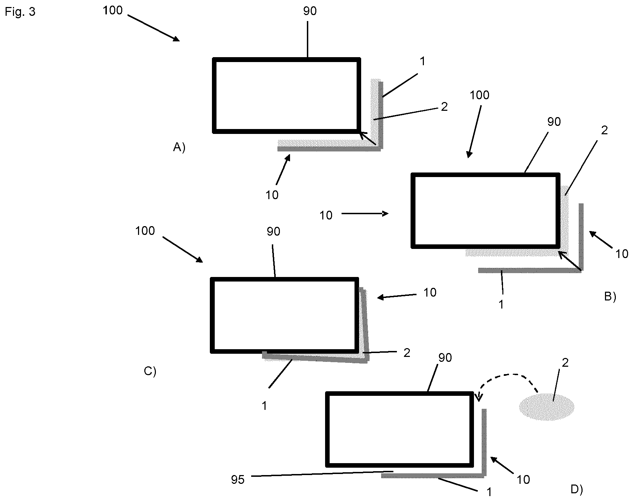

Fig. 3 zeigt verschiedentlich bereitgestellte Handwerkzeugakkus 100. In Fig. 3A ist die Werkzeugakku-Schutzschale 10 als separates an dem Handwerkzeugakku 100 befestigbares Bauteil ausgebildet. Zur Befestigung weist die als Dämpfungsschicht wirkende Zwischenschicht 2 eine klebende Oberfläche auf, mittels derer die Werkzeugakku-Schutzschale 10 in Gänze an dem Werkzeugakkugehäuse 90 des Handwerkzeugakkus 100 befestigt werden kann. Alternativ oder zusätzlich zur beschriebenen Klebeschicht kann die Werkzeugakku-Schutzschale 10 auch mittels einer Rast- oder Schnappverbindung am Handwerkzeugakku 100 befestigt werden, wie mit Bezug auf spätere Figuren erläutert wird. In Fig. 3A wird demnach die Werkzeugakku-Schutzschale 10 als zwei Komponenten-Sandwichaufbau an dem Werkzeugakkugehäuse 90 befestigt.

Aus Fig. 3B ist ersichtlich, dass die als Dämpfungsschicht wirkende Zwischenschicht 2 bereits an dem Werkzeugakkugehäuse 90 angeordnet ist und die Außenschale 1, angedeutet durch die Pfeilrichtung, an der Zwischenschicht 2 befestigt wird. Eine Befestigung kann beispielsweise mittels einer Klebeverbindung und/oder Schnappverbindung erfolgen. Demgemäß zeigt Fig. 3B die Anordnung der Außenschale 1 an einem mit Zwischenschicht 2 bereitgestellten Werkzeugakkugehäuse 90, wodurch sich der Sandwichaufbau der Werkzeugakku-Schutzschale 10 im zusammengebauten Zustand ergibt.

In Fig. 3C ist die Werkzeugakku-Schutzschale 10 durch ein Koinjektionsverfahren als Sandwichbauteil bereitgestellt. Dabei werden in einem Spritzgussverfahren gleichzeitig die Außenschale 1 und die Zwischenschicht 2 erzeugt. Dazu bietet es sich an, wenn die Außenschale 1 und die Zwischenschicht 2 aus dem gleichen Stoff bestehen, aber voneinander verschiedenen Dichten aufweisen. Dies kann beispielsweise dadurch erreicht werden, dass während der Koinjektion verschiedene Aufschäumgrade eines Kunststoffes, der zur Herstellung der Außenschale 1 und der Zwischenschicht 2 dient, realisiert werden.

Fig. 3D zeigt schließlich eine weitere Variante der Bereitstellung einer erfindungsgemäßen Werkzeugakku-Schutzschale 10 an einem Handwerkzeugakku 100. Dafür wird zunächst die Außenschale 1 in einem definierten Abstand, beispielsweise 10 mm von der Oberfläche 95 des Werkzeugakkugehäuses 90 angeordnet und die Zwischenschicht 2 als spritzgussfähige Masse in den Zwischenraum eingespritzt. Derart wird im Ergebnis ein Sandwichaufbau mit Außenschale 1 und als Dämpfungsschicht wirkender Zwischenschicht 2 erreicht, wobei die Zwischenschicht 2 derart an der Außenschale 1 angeordnet ist, dass die zwischen der Außenschale 1 und der Oberfläche 95 des Werkzeugakkugehäuses 90 befindlich ist, wenn die Werkzeugakku-Schutzschale 10 am Werkzeugakkugehäuse 90 angeordnet ist.

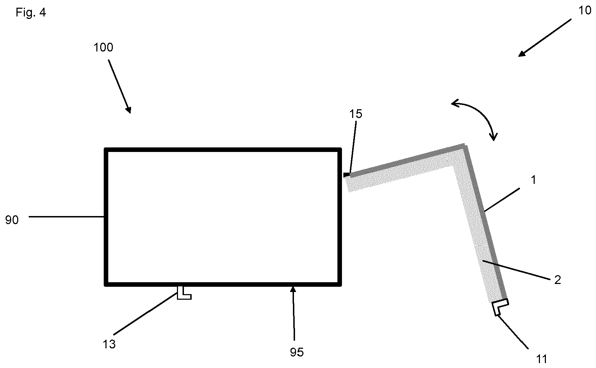

Ein erfindungsgemäßer Handwerkzeugakku 100 in Fig. 4 weist eine Werkzeugakku-Schutzschale 10 auf, die über ein Filmscharnier 15 aus einem flexiblen Kunststoff an dem Werkzeugakkugehäuse 90 des Handwerkzeugakkus 100 klappbar befestigt ist. Die Werkzeugakku-Schutzschale 10 weist eine Rastnase 11 auf, die zum Eingriff in eine korrespondierende Rastaufnahme 13, die am Werkzeugakkugehäuse 90 angeordnet ist, ausgebildet ist. Rastnase 11 und korrespondierende Rastaufnahme 13 bilden eine Rastverbindung 11, 13.

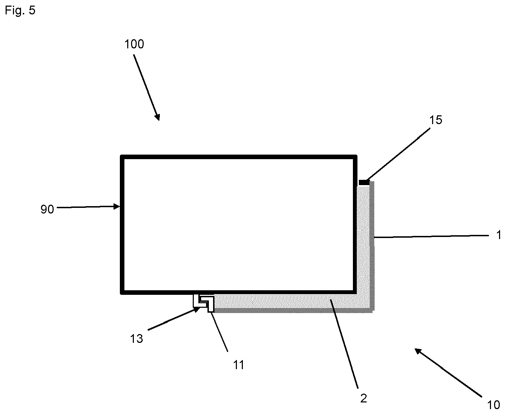

Fig. 5 zeigt den Handwerkzeugakku 100 aus Fig. 4, wobei die Werkzeugakku-Schutzschale 10 nunmehr bestimmungsgemäß an dem Werkzeugakkugehäuse 90 angeordnet ist. Das heißt, die Rastnase 11 der Werkzeugakku-Schutzschale 10 ist in der korrespondierenden Rastaufnahme 13 des Werkzeugakkugehäuses 90 eingerastet.

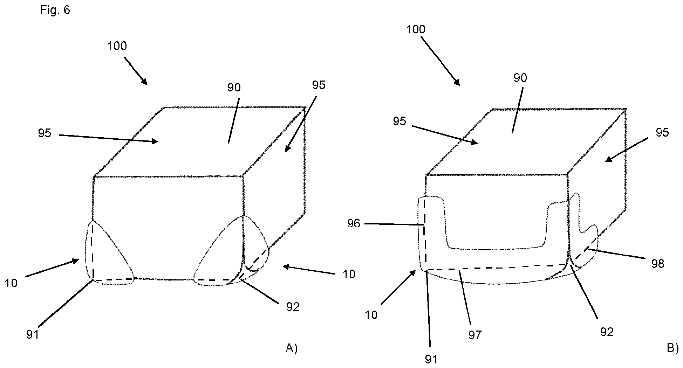

In Fig. 6A ist eine Werkzeugakku-Schutzschale 10 dargestellt, die als Eckenschutz ausgebildet ist. Die Werkzeugakku-Schutzschale 10 ist ausgebildet, eine Ecke 91, 92 des Werkzeugakkugehäuses 90 passgenau aufzunehmen und einen überwiegenden Anteil der Oberfläche 95 des Werkzeugakkugehäuses 90 abdeckungsfrei zu belassen. Im Ausführungsbeispiel der Fig. 6A ist eine jeweilige Werkzeugakku-Schutzschale 10 ausgebildet, genau eine Ecke, das heißt Ecke 91 beziehungsweise Ecke 92 des Handwerkzeugakkus 100 aufzunehmen.

Eine Werkzeugakku-Schutzschale 10, die als kombinierter Eck-Kantenschutz ausgebildet ist, ist in Fig. 6B dargestellt. Die Werkzeugakku-Schutzschale 10 der Fig. 6B ist ausgebildet, genau zwei Ecken 91, 92 des Werkzeugakkugehäuses 90 vollständig aufzunehmen und ebenfalls eine Kante 97, die zwischen den Ecken 91, 92 verläuft, vollständig zu umschließen. Des Weiteren ist die Werkzeugakku-Schutzschale 10 der Fig. 6B ausgebildet, eine weitere Kante 96, sowie eine weitere Kante 98 des Werkzeugakkugehäuses 90 passgenau, aber nur abschnittsweise aufzunehmen. Wie ebenfalls aus Fig. 6B ersichtlich ist, ist ein überwiegender Anteil der Oberfläche 95 des Werkzeugakkugehäuses 90 abdeckungsfrei belassen.

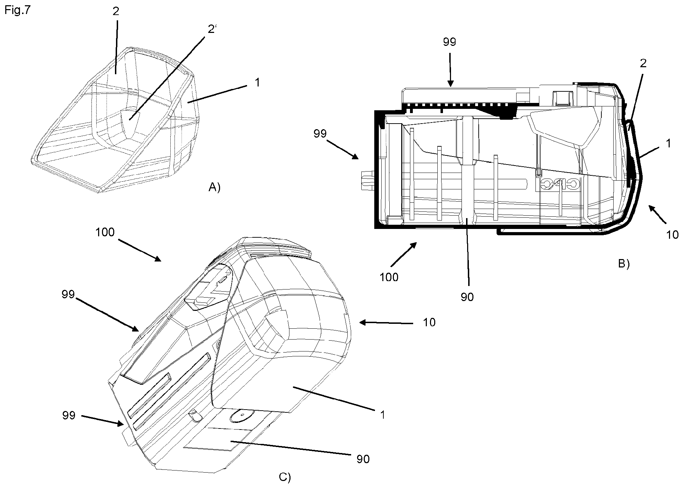

Fig. 7A zeigt eine als kombinierter Eck-Kantenschutz ausgebildete Werkzeugakku-Schutzschale 10 in perspektivischer Darstellung. In den Fig. 7B und 7C ist die Werkzeugakku-Schutzschale 10 an einem Werkzeugakkugehäuse 100 angeordnet, wobei Fig. 7B eine Schnittdarstellung repräsentiert. Wie aus den Fig. 7B und 7C ersichtlich ist, ist die Werkzeugakku-Schutzschale 10, die als kombinierter Eck-Kantenschutz ausgebildet ist, gegenüberliegend zu einer Geräteaufnahmeseite 99 angeordnet, über die ein Anschluss des Handwerkzeugakkus 100 an eine nicht gezeigte Handwerkzeugmaschine erfolgt. Mit anderen Worten schützt die Werkzeugakku-Schutzschale 10 eine exponierte Seite des Handwerkzeugakkus 100 während des Betriebs in einer Handwerkzeugmaschine. Wie aus Fig. 7A ersichtlich ist, ist die Zwischenschicht 2 im Bereich 2' verstärkt ausgebildet, da an dieser Stelle ein erhöhter Eintrag von Stoßenergie zu erwarten ist. Im Übrigen, wie aus Fig. 7B ersichtlich, weist die Zwischenschicht 2 eine im Wesentlichen konstante Wandstärke auf. Die Werkzeugakku-Schutzschale 10 ist passgenau zum Handwerkzeugakku 100 ausgebildet.

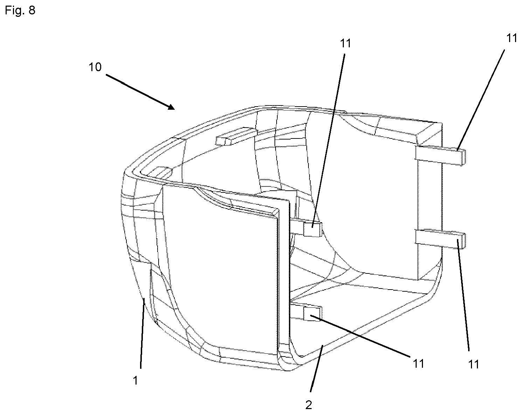

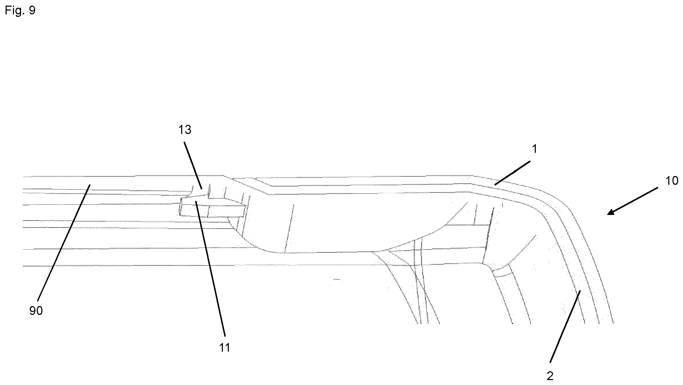

Fig. 8 zeigt ein weiteres Ausführungsbeispiel einer erfindungsgemäßen Werkzeugakku-Schutzschale 10, wobei diese genau vier Rastnasen 11 zur Befestigung der Werkzeugakku-Schutzschale 10 an dem in Fig. 9 in Ausschnitten dargestellten Handwerkzeugakku 100 aufweist. In Fig. 9 ist gezeigt, wie die Rastnasen 11 in eine Rastaufnahme 13, die vorliegend als Hinterschneidung, die vom Werkzeugakkugehäuse 90 umfasst ist, ausgebildet ist.

### Bezugszeichenliste

- 1: Außenschale
- 2, 4: Zwischenschicht
- 3: Weitere Schale
- 4: Weitere Zwischenschicht
- 10: Werkzeugakku-Schutzschale
- 11: Rastnase
- 13: Rastaufnahme
- 90: Werkzeugakkugehäuse
- 91, 92: Ecke
- 95: Oberfläche des Werkzeugakkugehäuses
- 96, 97, 98: Kante
- 100: Handwerkzeugakku
- A: Akku-Zellen
- E1: Außenschalen-Elastizitätsmodul
- E2: Zwischenschicht-Elastizitätsmodul
- E90: Elastizitätsmodul des Werkzeugakkugehäuses
- G: Gesamtwandstärke

## Patentansprüche

1. Werkzeugakku-Schutzschale (10) für einen Handwerkzeugakku (100) mit einem Werkzeugakkugehäuse (90), **dadurch gekennzeichnet, dass** die Werkzeugakku-Schutzschale (10) als Sandwichaufbau mit einer Außenschale (1) und einer als Dämpfungsschicht wirkenden Zwischenschicht (2, 4), die weicher und/oder elastischer als die Außenschale (1) ist, ausgebildet ist, wobei die Zwischenschicht (2, 4) derart an der Außenschale (1) angeordnet ist, dass sie zwischen der Außenschale (1) und einer Oberfläche (95) des Werkzeugakkugehäuses (90) befindlich ist, wenn die Werkzeugakku-Schutzschale (10) am Werkzeugakkugehäuse (90) angeordnet ist.

2. Werkzeugakku-Schutzschale (10) nach Anspruch 1,
**dadurch gekennzeichnet, dass** die Außenschale (1) ein Außenschalen-Elastizitätsmodul (E1) und die Zwischenschicht (2, 4) ein Zwischenschicht-Elastizitätsmodul (E2) aufweist, wobei der Außenschalen-Elastizitätsmodul (E1) größer als der Zwischenschicht-Elastizitätsmodul (E2) ist.

3. Werkzeugakku-Schutzschale (10) nach Anspruch 1 oder 2,
**dadurch gekennzeichnet, dass** die Außenschale (1) eine höhere Shore-Härte als die Zwischenschicht (2, 4) aufweist.

4. Werkzeugakku-Schutzschale (10) nach einem der vorangehenden Ansprüche,
**dadurch gekennzeichnet, dass** die Zwischenschicht (2, 4) aus einem Elastomer, insbesondere thermoplastischen Elastomer besteht.

5. Werkzeugakku-Schutzschale (10) nach einem der vorangehenden Ansprüche,
**dadurch gekennzeichnet, dass** die Außenschale (1) und die Zwischenschicht (2, 4) aus dem gleichen Stoff bestehen und voneinander verschiedene Dichten aufweisen, wobei die Zwischenschicht (2, 4) bevorzugt aus einem aufgeschäumten Kunststoff besteht.

6. Werkzeugakku-Schutzschale (10) nach einem der vorangehenden Ansprüche,
**dadurch gekennzeichnet, dass** der Sandwichaufbau wenigstens eine weitere Schale (3) und eine weitere Zwischenschicht (4) aufweist.

7. Werkzeugakku-Schutzschale (10) nach einem der vorangehenden Ansprüche,
**dadurch gekennzeichnet, dass** die Außenschale (1) und/oder die weitere Schale (3) aus einem schlagzähen Kunststoff besteht.

8. Werkzeugakku-Schutzschale (10) nach einem der vorangehenden Ansprüche,
**dadurch gekennzeichnet, dass** die Zwischenschicht (2, 4) eine Wandstärke zwischen 0,5 mm und 10 mm, bevorzugt zwischen 2 mm und 2,5 mm aufweist und/oder die Außenschale (1) eine Wandstärke zwischen 0,5 mm und 10 mm, bevorzugt zwischen 2 mm und 2,5 mm aufweist.

9. Werkzeugakku-Schutzschale (10) nach einem der vorangehenden Ansprüche,
**dadurch gekennzeichnet, dass** die Zwischenschicht (2, 4) eine im Wesentlichen konstante Wandstärke aufweist.

10. Werkzeugakku-Schutzschale (10) nach Ansprüche 1 bis 8,
**dadurch gekennzeichnet, dass** die Wandstärke der Zwischenschicht (2, 4) mit Aufprallrichtung relativ zur Schwerpunktlage des Werkzeugakkus skaliert.

11. Werkzeugakku-Schutzschale (10) nach einem der vorangehenden Ansprüche,
**dadurch gekennzeichnet, dass** eine Gesamtwandstärke (G) der Werkzeugakku-Schutzschale (10), unabhängig der von ihr umfassten Anzahl von Zwischenschichten (2, 4) und/oder Schalen (1, 3), weniger als 10 mm beträgt, bevorzugt zwischen 4 und 5 mm.

12. Werkzeugakku-Schutzschale (10) nach einem der vorangehenden Ansprüche,
**dadurch gekennzeichnet, dass** die Werkzeugakku-Schutzschale (10) mittels einer Klebeverbindung an dem Werkzeugakkugehäuse (90) befestigbar ist.

13. Werkzeugakku-Schutzschale (10) nach einem der vorangehenden Ansprüche,
**dadurch gekennzeichnet, dass** die Werkzeugakku-Schutzschale (10) mittels einer Rastverbindung (11, 13) an dem Werkzeugakkugehäuse (90) befestigbar ist, bevorzugt in Zusammenwirkung mit einem Filmscharnier (15).

14. Werkzeugakku-Schutzschale (10) nach einem der vorangehenden Ansprüche,
**dadurch gekennzeichnet, dass** die Außenschale (1) und/oder die Zwischenschicht (2, 4) mittels Spritzgussverfahren, insbesondere mittels Koinjektion an das Werkzeugakkugehäuse (90) angeformt sind.

15. Werkzeugakku-Schutzschale (10) nach einem der vorangehenden Ansprüche,
**dadurch gekennzeichnet, dass** die Werkzeugakku-Schutzschale (10) als Eckenschutz und/oder Kantenschutz ausgebildet ist, wobei die Werkzeugakku-Schutzschale (10) ausgebildet ist, eine Ecke (91, 92) und/oder eine Kante (96, 97, 98) des Werkzeugakkugehäuse (90) passgenau aufzunehmen und einen überwiegenden Anteil der Oberfläche (95) des Werkzeugakkugehäuses (90) abdeckungsfrei zu belassen.

16. Handwerkzeugakku (100) mit einem Werkzeugakkugehäuse (90) und mit einer Werkzeugakku-Schutzschale (10) nach einem der vorangehenden Ansprüche, die an dem Werkzeugakkugehäuse (90) befestigt oder an diesem befestigbar ausgebildet ist.

## Claims

1. Tool battery protective shell (10) for a hand tool battery (100) with a tool battery housing (90), **characterised in that** the tool battery protective shell (10) is made as a sandwich structure with an outer shell (1) and an intermediate layer (2, 4) acting as a damping layer, which is softer and/or more elastic than the outer shell (1), in which the intermediate layer (2, 4) is arranged on the outer shell (1) in such a way that it is between the outer shell (1) and a surface (95) of the tool battery housing (90), when the tool battery protective shell (10) is arranged on the tool battery housing (90).

2. Tool battery protective shell (10) according to claim 1,
**characterised in that** the outer shell (1) has an outer shell modulus of elasticity (E1) and the intermediate layer (2, 4) has an intermediate layer modulus of elasticity (E2), in which the outer shell modulus of elasticity (E1) is greater than the intermediate layer modulus of elasticity (E2).

3. Tool battery protective shell (10) according to claim 1 or 2,
**characterised in that** the outer shell (1) has a higher Shore hardness than the intermediate layer (2, 4).

4. Tool battery protective shell (10) according to one of the previous claims,
**characterised in that** the intermediate layer (2, 4) consists of an elastomer, particularly a thermoplastic elastomer.

5. Tool battery protective shell (10) according to one of the previous claims,
**characterised in that** the outer shell (1) and the intermediate layer (2, 4) consist of the same material and have different thicknesses from each other, in which the intermediate layer (2, 4) preferably consists of a foamed plastic.

6. Tool battery protective shell (10) according to one of the previous claims,
**characterised in that** the sandwich structure has at least a further shell (3) and a further intermediate layer (4).

7. Tool battery protective shell (10) according to one of the previous claims,
**characterised in that** the outer shell (1) and/or the further shell (3) consists of a shock-resistant plastic.

8. Tool battery protective shell (10) according to one of the previous claims,
**characterised in that** the intermediate layer (2, 4) has a wall thickness between 0.5 mm and 10 mm, preferably between 2 mm and 2.5 mm and/or the outer shell (1) has a wall thickness between 0.5 mm and 10 mm, preferably between 2 mm and 2.5 mm.

9. Tool battery protective shell (10) according to one of the previous claims, **characterised in that** the intermediate layer (2, 4) has an essentially constant wall thickness.

10. Tool battery protective shell (10) according to claims 1 to 8,
**characterised in that** the wall thickness of the intermediate layer (2, 4) is scaled with an impact direction in relation to the centre of gravity position of the tool battery.

11. Tool battery protective shell (10) according to one of the previous claims,
**characterised in that,** irrespective of the number of intermediate layers (2, 4) and/or shells (1,3) comprised by it, a total wall thickness (G) of the tool battery protective shell (10) is less than 10 mm, preferably between 4 and 5 mm.

12. Tool battery protective shell (10) according to one of the previous claims,
**characterised in that** the tool battery protective shell (10) may be fastened to the tool battery housing (90) by means of an adhesive connection.

13. Tool battery protective shell (10) according to one of the previous claims,
**characterised in that** the tool battery protective shell (10) may be fastened to the tool battery housing (90) by means of a snap-on connection (11, 13), preferably working together with a film hinge (15).

14. Tool battery protective shell (10) according to one of the previous claims,
**characterised in that** the outer shell (1) and/or the intermediate layer (2, 4) are moulded to the tool battery housing (90) by means of an injection moulding process, particularly by means of coinjection.

15. Tool battery protective shell (10) according to one of the previous claims,
**characterised in that** the tool battery protective shell (10) is made as corner protection and/or edge protection, in which the tool battery protective shell (10) is made to take a corner (91, 92) and/or an edge (96, 97, 98) of the tool battery housing (90) exactly and leave a predominant proportion of the surface (95) of the tool battery housing (90) cover-free.

16. Hand tool battery (100) with a tool battery housing (90) and with a tool battery protective shell (10) according to one of the previous claims, which is fastened to the tool battery housing (90) or is made so that it may be fastened to it.

## Revendications

1. Coque de protection de batterie d'outil (10) pour une batterie d'outil à main (100) ayant un boîtier de batterie d'outil (90), **caractérisée en ce que** la coque de protection de batterie d'outil (10) est réalisée sous la forme d'une construction en sandwich avec une coque extérieure (1) et une couche intermédiaire (2, 4) faisant office de couche d'amortissement, laquelle couche intermédiaire est plus souple et/ou plus élastique que la coque extérieure (1), dans laquelle la couche intermédiaire (2, 4) est agencée sur la coque extérieure (1) de telle sorte qu'elle se situe entre la coque extérieure (1) et une surface (95) du boîtier de batterie d'outil (90) lorsque la coque de protection de batterie d'outil (10) est agencée sur le boîtier de batterie d'outil (90).

2. Coque de protection de batterie d'outil (10) selon la revendication 1,
**caractérisée en ce que** la coque extérieure (1) a un module d'élasticité de coque extérieure (E1) et la couche intermédiaire (2, 4) a un module d'élasticité de couche intermédiaire (E2), dans laquelle le module d'élasticité de la coque extérieure (E1) est supérieur au module d'élasticité de la couche intermédiaire (E2).

3. Coque de protection de batterie d'outil (10) selon la revendication 1 ou 2,
**caractérisée en ce que** la coque extérieure (1) a une dureté Shore plus élevée que celle de la couche intermédiaire (2, 4).

4. Coque de protection de batterie d'outil (10) selon l'une des revendications précédentes,
**caractérisée en ce que** la couche intermédiaire (2, 4) est constituée d'un élastomère, en particulier d'un élastomère thermoplastique.

5. Coque de protection de batterie d'outil (10) selon l'une des revendications précédentes,
**caractérisée en ce que** la coque extérieure (1) et la couche intermédiaire (2, 4) sont constituées de la même matière et ont des densités différentes l'une de l'autre, dans laquelle la couche intermédiaire (2, 4) est de préférence constituée d'une matière plastique expansée.

6. Coque de protection de batterie d'outil (10) selon l'une des revendications précédentes,
**caractérisée en ce que** la construction en sandwich comporte au moins une coque supplémentaire (3) et une couche intermédiaire supplémentaire (4).

7. Coque de protection de batterie d'outil (10) selon l'une des revendications précédentes,
**caractérisée en ce que** la coque extérieure (1) et/ou la coque supplémentaire (3) sont constituées d'une matière plastique résistante aux chocs.

8. Coque de protection de batterie d'outil (10) selon l'une des revendications précédentes,
**caractérisée en ce que** la couche intermédiaire (2, 4) a une épaisseur de paroi comprise entre 0,5 mm et 10 mm, de préférence entre 2 mm et 2,5 mm, et/ou la coque extérieure (1) a une épaisseur de paroi comprise entre 0,5 mm et 10 mm, de préférence entre 2 mm et 2,5 mm.

9. Coque de protection de batterie d'outil (10) selon l'une des revendications précédentes,
**caractérisée en ce que** la couche intermédiaire (2, 4) a une épaisseur de paroi sensiblement constante.

10. Coque de protection de batterie d'outil (10) selon les revendications 1 à 8,
**caractérisée en ce que** l'épaisseur de paroi de la couche intermédiaire (2, 4) varie avec une direction d'impact par rapport à la position du centre de gravité de la batterie d'outil.

11. Coque de protection de batterie d'outil (10) selon l'une des revendications précédentes,
**caractérisée en ce qu'**une épaisseur de paroi totale (G) de la coque de protection de batterie d'outil (10), indépendamment du nombre de couches intermédiaires (2, 4) et/ou de coques (1, 3) qu'elle comprend, est inférieure à 10 mm, de préférence comprise entre 4 et 5 mm.

12. Coque de protection de batterie d'outil (10) selon l'une des revendications précédentes,
**caractérisée en ce que** la coque de protection de batterie d'outil (10) peut être fixée sur le boîtier de batterie d'outil (90) au moyen d'une liaison adhésive.

13. Coque de protection de batterie d'outil (10) selon l'une des revendications précédentes,
**caractérisée en ce que** la coque de protection de batterie d'outil (10) peut être fixée sur le boîtier de batterie d'outil (90) au moyen d'une liaison à encliquetage (11, 13), de préférence en coopération avec une charnière à film (15).

14. Coque de protection de batterie d'outil (10) selon l'une des revendications précédentes,
**caractérisée en ce que** la coque extérieure (1) et/ou la couche intermédiaire (2, 4) sont formées sur le boîtier de batterie d'outil (90) au moyen d'un procédé de moulage par injection, en particulier au moyen d'une coinjection.

15. Coque de protection de batterie d'outil (10) selon l'une des revendications précédentes,
**caractérisée en ce que** la coque de protection de batterie d'outil (10) est configurée comme une protection de coin et/ou une protection d'arête, dans laquelle la coque de protection de batterie d'outil (10) est configurée pour recevoir précisément un coin (91, 92) et/ou une arête (96, 97, 98) du boîtier de batterie d'outil (90) et pour laisser la majeure partie de la surface (95) du boîtier de batterie d'outil (90) non couverte.

16. Batterie d'outil à main (100) comportant un boîtier de batterie d'outil (90) et une coque de protection de batterie d'outil (10) selon l'une des revendications précédentes, laquelle batterie d'outil à main est fixée sur le boîtier de batterie d'outil (90) ou est configurée pour pouvoir être fixée sur celui-ci.
